# EUROPEAN PATENT SPECIFICATION

(11) **EP 0 247 359 B1**
(45) Date of publication and mention of the grant of the patent: **18.08.1993**
(21) Application number: 87105952.3
(22) Date of filing: 23.04.1987
(51) Int. Cl.: B29C 67/14, B29C 51/10

(54) **Interior material for vehicles and method for its manufacture**
Innenausbaumaterial für Fahrzeuge und Verfahren zu seiner Herstellung
Matériau de garnissage intérieur pour véhicules et son procédé de fabrication

(30) Priority: 25.04.1986 JP 95928/86; 25.04.1986 JP 62693/86; 30.05.1986 JP 126976/86; 30.05.1986 JP 83426/86
(43) Date of publication of application: 02.12.1987
(73) Proprietor: INOAC CORPORATION, Nagoya-shi Aichi-ken (JP)
(72) Inventor: Okina, Toyohiko, Anjo-shi Aichi-ken (JP); Tsushima, Ichiro, Anjo-shi Aichi-ken (JP); Kawabata, Satoshi, Anjo-shi Aichi-ken (JP); Teranishi, Akinori, Anjo-shi Aichi-ken (JP); Goto, Hiroshi, Anjo-shi Aichi-ken (JP); Ohyama, Tetsuo, Anjo-shi Aichi-ken (JP); Yoshida, Rikio c/o INOUE MTP K.K., Nagoya-shi Aichi-ken (JP)
(74) Representative: Vetter, Hans, Dipl.-Phys. Dr.

(56) References cited:
- FR-A- 2 165 776
- US-A- 3 954 537
- US-A- 3 960 999
- US-A- 4 075 266
- US-A- 4 374 229
- DERWENT JAPANESE PATENTS GAZETTE, week 8718, section CH, class A, no. 87-126289 (18), Derwent Publications Ltd, London, GB; JP-A-62 068 729 (MITSUBISHI PLASTICS LTD) 28-03-1987
- PATENT ABSTRACTS OF JAPAN, vol 9, no. 57 (M-363)[1780], 13th March 1985; & JP-A-59 192 529 (SHIGERU KOGYO K.K.) 31-10-1984
- PATENT ABSTRACTS OF JAPAN, vol. 8, no. 174 (M-316)[1611], 10th August 1984; & JP-A-59 68 216 (INOUE EMU TEE PII K.K.) 18-04-1984

## Description

### TECHNICAL FIELD

This invention relates to an interior material, of shock absorbing capability, for vehicles, including a rigid base and a surface layer mounted thereon and to a method for its manufacture.

### BACKGROUND ART

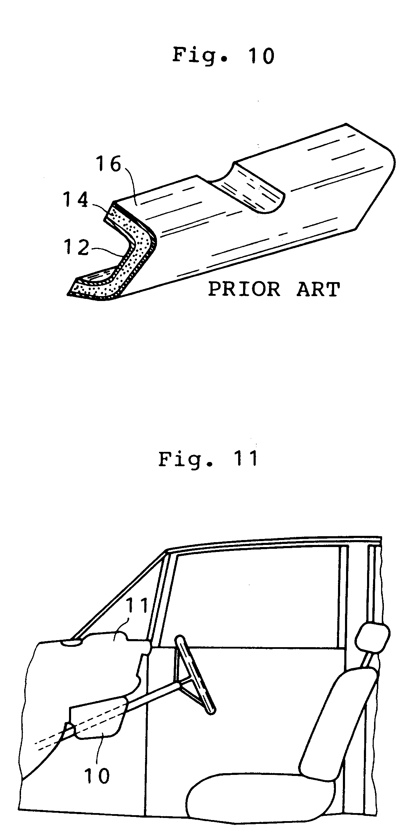

The interior material is used, as an example, for a knee pad 10, an instrument panel 11 both shown in Fig. 11, door trim, quarter trim or a console lid. The requirement is that the material has good impact absorbing capabilities to protect the driver or passenger and maintain a good surface appearance and feeling.

Two methods have been used for manufacturing an interior material for vehicles. One method is: compressing a molding material, which contains a fiber such as cotton, flax or a synthetic fiber and a phenol resin permeated therethrough and which is generally called "Resin-felt", in a die so as to form a rigid base; and pressing the base and a surface layer mounted thereon into another mold or die to unite them together. The other method is: injection molding a rigid base mainly consisting of rigid plastic in a cast, or press forming a metallic base in a die; and foam-molding a cushion pad between the base and a surface layer in a mold so as to unite the base with the surface layer. An example of a knee pad generally used and manufactured by the second method is shown in Fig. 10, in which a cushion pad 14 is formed between a metal insert (a steel plate) 12 and a surface layer 16. This metal insert 12 is used for absorbing impact, for example, in a knee pad and is used for maintaining its shape, for example, in a console lid.

The general methods for manufacturing this material and the product manufactured thereby, however, have the following problems. First, the process of manufacture is very complicated and since at least two molds or dies are required for forming a base and then for uniting the base with a surface layer, the cost of manufacture is high. Second, if metal is used in the base, the interior material becomes heavy. If the Resin-felt or a rigid plastic is used, the base cannot help thickening and thus becoming heavy because of the low strength thereof. Moreover, the construction is rather complicated.

A further method for manufacturing fiber reinforced plastic moldings is disclosed in JP-A 62 068 729. According to this method a stretchable film is put on a vacuum mold in the molding step. Thereby a hand lay-up method is used an an uncured epoxy solution or an uncured polyester solution is applied with a brush. This method is not appropriate for series construction and a low viscosity of the polymer composition in the initial state can not be obtained.

Moreover, a method for manufcaturing an interial material for vehicles is known from FR-A 2 165 778. According to this known method a thermal deformable tissue covered by a caoutchouc film is put in a vacuum mold by heating. Then a layer of plastic film containing essentially polyether is brought on the material in the mold. This method shows the same disadvantages as described above.

### DISCLOSURE OF THE INVENTION

The above problems of the prior art are solved by a manufacturing method including the steps of:
(a) vacuum forming of a plastic surface layer by sucking a thermoplastic resin sheet in a thermosoftened state into a shaped mold:
(b) placing a reinforcing fiber mat onto the surface layer via an adhesive in the mold;
(c) injecting a polymer composition containing unsaturated mono alcohol, polyisocyanate and catalysts into the mold so as to permeate the polymer composition throughout the reinforcing fiber mat; and
(d) demolding an integrally-molded object from the mold after the completion of curing of the polymer composition.

These objects are also attained by an interior material for vehicles manufactured by the above method, which includes a reinforcing fiber mat with a polymer composition permeated therein and a plastic surface layer integrally formed therewith. 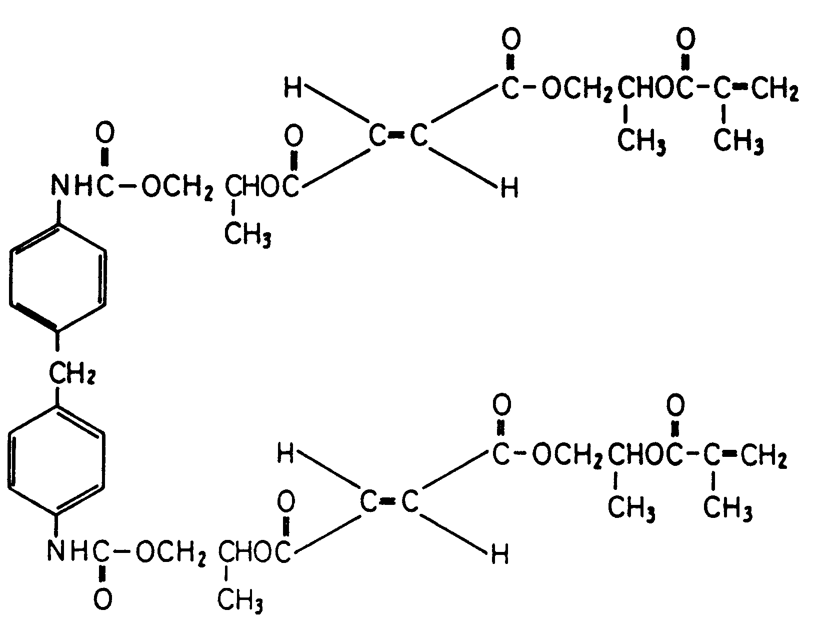
An unsaturated mono alcohol such as fumarate ester-mono alcohol reacts with a polyisocyanate such as a liquified version of 4,4'-diphenylmethane diisocyanate to form a compound shown by an above formula (I). When peroxide is included in this reaction, the two types of double bonds also react to give a highly crosslinked polymer having a high strength and rigidity such as an unsaturated polyester. Here, the highly crosslinked polymer contains urethane bonds and the bonds caused by radical reaction.

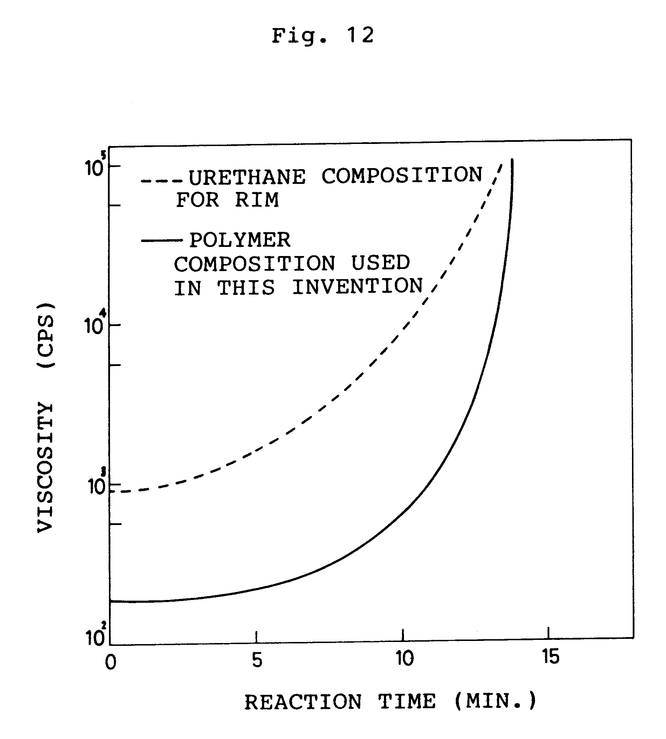

The polymer composition consisting of unsaturated mono alcohol, polyisocyanate and catalysts is characterized in its low viscosity and the low thickening characteristic in the initial state of the reaction. Fig. 12 shows plots for the viscosity of the polymer composition and a general urethane composition for RIM (Reaction Injection Molding) each against the reaction time. From the figure, the low viscosity of the polymer composition in the initial state of the reaction can be observed. The urethane composition used is made of 100 parts of polyether polyol (Molecular weight 6000, OH value 28, 3 functional groups), 19 parts of ethyleneglycol, 0.1 part of dibutyltin dilaurate, 80 parts of dioctyl phthalate (DOP) and 110 parts of modified MDI (29NCO%). The polymer composition is, on the other hand, made of 100 parts of fumarate ester-mono alcohol, 0.1 part of dibutyltin dilaurate, 0.4 part of a chelated cobalt compound, 50 parts of DOP, 50 parts of modified MDI (29NCO%) and 5.1 parts of tert-butyl perbenzoate. Here, the part is a weight part. DOP is added to easily measure the viscosity, and the concentration thereof is adjusted to 26 % in each composition.

Since having the low viscosity in the initial state of the reaction, the polymer composition injected in a mold can be easily and homogeneously permeated through the reinforcing fiber mat. The polymer composition then cures to become a highly crosslinked density polymer. As a result, the polymer composition and the reinforcing fiber mat are united so as to form a base. The base possesses both high rigidity and high strength by the synergistic effect of the rigidity of the highly crosslinked density polymer and the strength of the reinforcing fiber mat. Thus, it can normally keep the shape of the interior material, distort in response to an impact and destruct itself in response to an especially great impact so as to absorb and decrease the impact for protecting a driver or a passenger. The good surface appearance and feeling is obtained by covering the base with a surface layer. The base and the surface layer are integrally molded via an adhesive. Since the above base is lighter in weight than a prior art base that included a metal insert, the interior material of the invention is lightened.

In summary, the present invention has following advantages and other related advantages. The method provides a simple manufacturing method of an interior material for vehicles, where only one mold or die is sufficient for its manufacturing process. It also provides a light weight interior material for vehicles, the construction of which is not complicated or costly.

### BRIEF DESCRIPTION OF DRAWINGS

The invention may be best understood by referring to the following detailed description of preferred embodiments and the accompanying drawings, wherein like numerals denote like elements and in which:
Figs. 1, 2, 3 and 4 are sectional views illustrating a process for manufacturing a door trim in a first embodiment of the invention;
Fig. 5 is a perspective view of the manufactured door trim in the first embodiment, partly in section;
Fig. 6 is a sectional view of a knee pad of a second embodiment of the invention;
Figs. 7, 8 and 9 are sectional views illustrating a process for manufacturing the knee pad in the second embodiment;
Fig. 10 is a perspective view of a prior art knee pad, partly in section;
Fig. 11 is a side view of the inside of an automobile; and
Fig. 12 is plots for viscosity of the polymer composition of the invention and of a general urethane composition each against the reaction time.

### BEST MODE FOR CARRYING OUT THE INVENTION

Hereafter preferred embodiments of the invention will be described in detail according to the attached drawings.

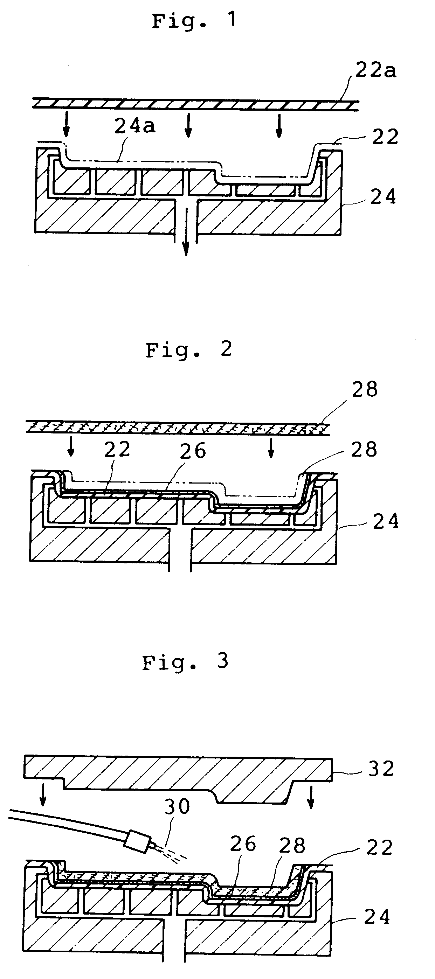

Figs. 1 through 4 illustrate a process of manufacture of a door trim as a first embodiment.

### (a) Vacuum forming of a plastic surface layer (see Fig. 1)

A thermoplastic resin sheet 22a in a thermosoftened state is sucked on a face 24a having a door trim shape in a mold 24 so as to vacuum form a surface layer 22 according to a conventional method. The thermoplastic resin used is appropriately chosen, considering the feeling or touching, from a simple substance of resilient polyvinyl chloride resin or resilient foamed polyvinyl chloride resin and a resilient mixed substance of polyvinyl chloride resin and ABS resin. The mold 24 has a hole for suction, which leads to several holes through the face 24a. The face 24a can have a pattern for decoration if required. The suction in the mold 24 may be stopped after forming the surface layer 22, or may be continued throughout the process of manufacture of the interior material in which to adhere the surface layer 22 on the face 24a, thus preventing the surface layer 22 from getting out of position.

### (b) Placing a reinforcing fiber mat (see Fig. 2)

An adhesive is applied to the surface layer 22 so as to form an adhesive layer 26, and then a reinforcing fiber mat 28 is placed onto the surface layer 22 via the adhesive layer 26. The adhesive used may be any of an urethane adhesive, an epoxy adhesive and an acrylic adhesive. For example, trade mark DA-3146 (Nogawa Chemical) or trade mark S-dine 277 NPU (Sekisui Chemical) is used. It is preferable to use a reinforcing fiber mat containing long glass-fibers, which is pre-shaped. In this embodiment, a continuous strand mat 600 g/m², trade mark M-8609 (Asahi Fiber Glass) is used. An auxiliary reinforcement such as carbon fiber is further added to a part of the reinforcing fiber mat especially required to have the strength.

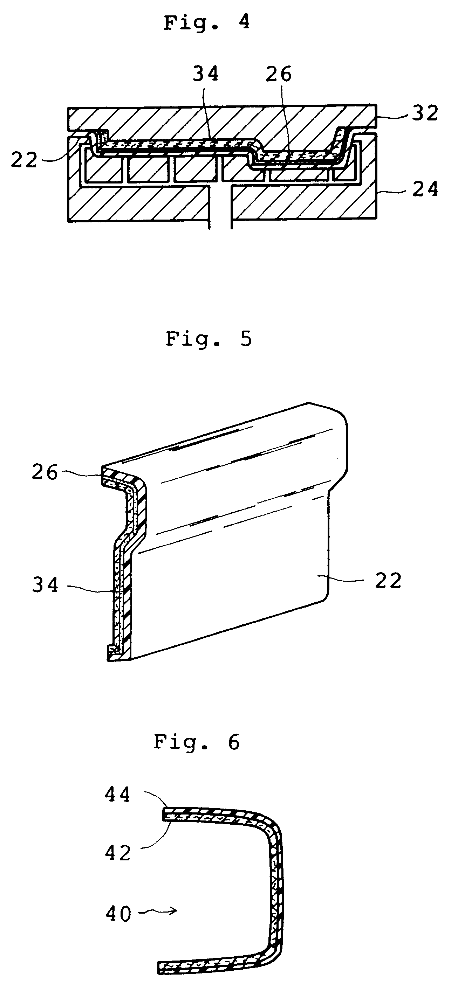

### (c) Injecting a polymer composition to permeate it through the reinforcing fiber mat (see Fig. 3)

A polymer composition 30 consisting of unsaturated mono alcohol, polyisocyanate and catalysts is injected into the mold 24 and the mold is then closed with a cover 32. There is no necessity of strongly pressing the cover 32 for molding, but the dead weight thereof is enough. This is because the polymer composition 30 scarcely foams in the reaction and thus there is substantially no increase of the pressure in the mold. The injection of the polymer composition 30 may be executed after closing the mold. The injection timing is determined based on the construction of the mold 24 and the equipment for manufacture. Although in the injection after closing the mold, it is required to apply a locking pressure substantially the same as an injection pressure (usually less that 2 kg/cm²), the locking pressure required in this embodiment is far less than a locking pressure (5 to 7 kg/cm²) required in foam-molding a rigid urethane foam.

The unsaturated mono alcohol preferably contains over 95% of a fumarate ester-mono alcohol. As an example given is an unsaturated mono alcohol synthesized from methacrylic acid, propylene oxide and maleic anhydride in the presence of an amine catalyst is given. This unsaturated mono alcohol contains both fumarate ester-mono alcohol and maleate ester-mono alcohol being isomeric with each other, and in more detail, over 95 % is the fumarate ester-mono alcohol and the remaining 0 to 5 % is the maleate ester-mono alcohol. The polyisocyanate used can be either of aromatic and aliphatic polyisocyanate.

The polymer composition consists of A component including unsaturated mono alcohol and B component including polyisocyanate, and these components are admixed while being injected into the mold. It is simple and convenient to use an injection molding machine (RIM molding machine) for injection.

An example of a combination of the polymer composition is shown below.

A component
unsaturated mono alcohol .....100 parts
(99 % of fumarate ester-mono alcohol and 1 % of maleate ester-mono alcohol, OH value 188)
dibutyltin dilaurate .....0.10 to 0.12 part
chelated cobalt compound.....0.10 to 0.15 part
B component
modified MDI (29NCO%) .....51 parts
(MD KASEI trade mark I-143L)
tert-butyl perbenzoate .....2.0 to 2.8 parts
The quantities of addition of the catalysts, i.e., dibutyltin dilaurate, chelated cobalt compound and tert-butyl perbenzoate, are determined based on the varieties of unsaturated mono alcohol and polyisocyanate used and the manufacture conditions so as to obtain the optimum rate of the reaction. Stannous octoate or dimethyltin dilaurate can be also used as a catalyst. Further, benzoil-peroxide, methyl-ethyl ketone peroxide, etc. as organic peroxide, or cobalt acetyl acetonate as chelated cobalt compound are used as catalysts or accelerators.

Since having the low viscosity before the reaction and in the initial state of the reaction, the polymer composition injected in the mold is easily permeated throughout the reinforcing fiber mat. As for the polymer composition having the combination shown above, the viscosity before the reaction is about 600 cps (25^{o}C), which is less than half of the viscosity, about 1500 cps (25^{o}C), of a conventional polyurethane composition.

### (d) Discharging an integrally-molded object from the mold after the completion of curing of the polymer composition (see Fig. 4)

The polymer composition permeated through the reinforcing fiber mat cures to become a highly crosslinked density polymer so as to form a base 34 by uniting with the reinforcing fiber mat. The base 34 has high strength and high rigidity by the synergistic effect of the highly crosslinked density polymer and the reinforcing fiber mat. If the polymer composition having the combination shown above is used, only 1 to 5 mm of the base can possess enough rigidity and strength for a door trim. The base 34 and the surface layer 22 are united by the adhesive effects of the polymer composition and of the adhesive layer 26. The integrally-molded object consisting of the surface layer 22 and the base 34, i.e., a door trim in this embodiment, is then demolded from the mold and is trimmed if necessary. Fig. 5 shows the manufactured door trim, partly in section.

A second embodiment of the invention is now described according to Figs. 6 through 9.

Fig. 6 is a sectional view of an U-shaped knee pad 40 consisting of a base 42 and a surface layer 44. The base 42 is made of a reinforcing fiber mat through which a polymer composition including unsaturated mono alcohol, polyisocyanate and catalysts is permeated. The unsaturated mono alcohol, the polymer composition, the catalysts and the reinforcing fiber mat used in the second embodiment are the same as those of the first embodiment. The surface layer 44 may be a sheet of flexible plastic such as a simple substance of resilient polyvinyl chloride resin or a mixed resilient substance of polyvinyl chloride resin and ABS resin or may be a fabric backing with a plastic sheet, a film and the like. The surface layer 44 is adhered to the base 42 while the polymer composition permeated throughout the reinforcing fiber mat cures.

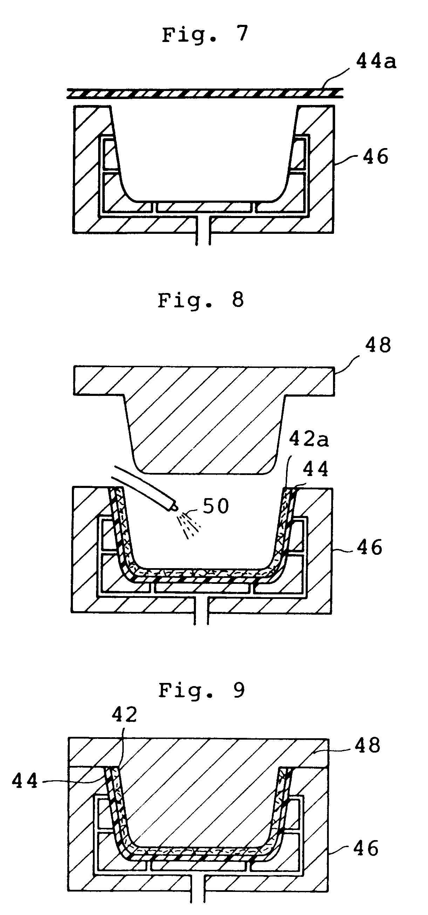

Figs. 7 through 9 illustrate a process of manufacture of the knee pad. Since the process in the second embodiment is almost the same as that in the first embodiment, here only a brief explanation is given. First, a surface layer 44 is vacuum molded from a flexible plastic sheet 44a in a mold 46. Second, a reinforcing fiber mat 42a is placed on the surface layer 44 via an adhesive and then a polymer composition 50 is injected into the mold 46. Third, the mold 46 is closed with a cover 48. After the completion of curing of the polymer composition, an integrally-molded object consisting of the base 42 and the surface layer 44, i.e., a knee pad in this embodiment, is demolded from the mold 46 and is trimmed if necessary. The weight of the knee pad thus manufactured is reduced to almost 50 % of a conventional knee pad including a metal insert.

Although the invention has been described with reference to specific embodiments thereof, it will be apparent that numerous changes and modifications may be made therein without departing from the scope of the invention. It is, therefore, to be understood that it is not intended to limit the invention to the embodiments shown but only by the scope of the claims which follow.

## Claims

1. A method for manufacturing an interior material for vehicles, the method comprising the steps of:
(a) vacuum forming of a plastic surface layer (22; 44) by sucking a thermoplastic resin sheet (22a; 44a) in a thermo-softened state into a mold (24; 46) with a certain shape;
(b) placing a reinforcing fiber mat (28; 42a) onto said surface layer (22; 44) via an adhesive (26) in said mold (24; 46);
(c) injecting a polymer composition (30; 50) containing unsaturated mono alcohol, polyisocyanate and catalysts into said mold (24; 46) so as to permeate said polymer composition (30; 50) throughout said reinforcing fiber mat (28; 42a); and
(d) demolding an integrally-molded object (40) from said mold (24; 46) after the completion of curing of said polymer composition (30; 50).

2. A method as claimed in claim 1, wherein the unsaturated mono alcohol and the polyisocyanate of said polymer composition (30; 50) are admixed while being injected into said mold (24; 46) in step (c).

3. A method as claimed in claim 2, wherein suction is executed throughout the steps (a), (b) and (c).

4. A method as claimed in claim 2, wherein step (c) can be replaced by the step of
(c1) injecting a polymer composition (30; 50) containing unsaturated mono alcohol, polyiscoyanate and catalysts into said mold (24; 46) so as to permeate said polymer composition (30; 50) throughout said reinforcing fiber mat (28; 42a), and closing said mold (24; 46) with a cover (32; 48) after the completion of permeation.

5. A method as claimed in claim 2, wherein step (c) can be replaced by the step of
(c2) closing said mold with a cover (32; 48) and then injecting a polymer composition (30; 50) containing unsaturated mono alcohol, polyisocyanate and catalysts into said mold (24; 46) so as to permeate said polymer composition (30; 50) throughout said reinforcing fiber mat (28; 42a).

6. An interior material for vehicles having a plastic surface layer and a layer of a polymer composition, which is manufactured by the method according to any of the preceding claims, characterized by comprising a reinforcing fiber mat (28; 42a) with the polymer composition (30; 50) permeated therein and the plastic surface layer (22; 44) integrally formed therewith, said polymer composition (30; 50) containing unsaturated mono alcohol, polyisocyanate and catalysts.

7. An interior material for vehicles as claimed in claim 6, wherein said thermoplastic resin sheet (22a; 44a) used in step (a) is one of a group of: resilient polyvinyl chloride resin; resilient foamed polyvinyl chloride resin; and a mixed resilient substance of polyvinyl chloride resin and ABS resin.

8. An interior material for vehicles as claimed in claim 6, wherein said reinforcing fiber mat (28; 42a) used in step (b) comprises glass-fibers.

9. An interior material for vehicles as claimed in claim 8, wherein said reinforcing fiber mat (28; 42a) partly contains carbon fibers.

10. An interior material for vehicles as claimed in claim 6, wherein said adhesive (26) used in step (b) is one of an urethane adhesive, an epoxy adhesive and an acrylic adhesive.

11. An interior material for vehicles as claimed in claim 6, wherein said unsaturated mono alcohol of the polymer composition (30; 50) used in step (c) contains both fumarate estermono alcohol and maleate ester-mono alcohol.

12. An interior material for vehicles as claimed in claim 11, wherein more than 95% of said unsaturated mono alcohol is fumarate ester-mono alcohol.

13. An interior material for vehicles as claimed in claim 11, wherein said unsaturated mono alcohol is synthesized from methacrylic acid, propylene oxide and maleic anhydride in the presence of an amine catalyst.

14. An interior material for vehicles as claimed in claim 6, wherein said polyisocyanate of the polymer composition (30; 50) used in step (c) is either one or a mixture of aromatic polyisocyanate and aliphatic polyisocyanate.

15. An interior material for vehicles as claimed in claim 6, wherein said catalyst of the polymer composition (30; 50) used in step (c) is one selected from the group consisting of dibutyltin dilaurate, stannous octoate, dimethyltin dilaurate, cobalt acetyl acetonate, tert-butyl perbenzoate, benzoil-peroxide and methyl-ethyl ketone peroxide, or a combination of two or more than two selected therefrom

## Patentansprüche

1. Verfahren zur Herstellung eines Innenausbaumaterials für Fahrzeuge, das die Schritte aufweist:
(a) Vakuumformen einer Kunststoff-Oberflächenschicht (22; 44) durch Ansaugen einer thermoplastischen Kunstharzplatte (22a; 44a) in einem thermisch erweichten Zustand in einer Form (24; 46) mit einer bestimmten Gestalt;
(b) Anordnen einer Verstärkungs-Fasermatte (28; 42a) auf der Oberflächenschicht (22; 44) mittels eines Klebemittels (26) in der Form (24; 46);
(c) Zuführen einer ungesättigten einwertigen Alkohol, Polyisocyanat und Katalysatoren enthaltenden Polymermasse (30; 50) in die Form (24; 46), damit die Polymermasse (30; 50) die Verstärkungs-Fasermatte (28; 42a) durchdringt;
(d) Herausnehmen eines integralgeformten Gegenstandes (40) aus der Form (24; 46) nach der Aushärtung der Polymermasse (30; 50).

2. Verfahren nach Anspruch 1, bei dem der ungesättigte einwertige Alkohol und das Polyisocyanat der Polymermasse (30; 50) während der Zuführung die Form (24; 46) im Schritt (c) vermischt werden.

3. Verfahren nach Anspruch 2, bei dem die Aushärtung während der Schritte (a), (b) und (c) durchgeführt wird.

4. Verfahren nach Anspruch 2, bei dem der Schritt (c) ersetzt werden kann durch den Schritt
(c1) Zuführen einer ungesättigten einwertigen Alkohol, Polyisocyanat und Katalysatoren enthaltenden Polymermasse (30; 50) in die Form (24; 46), damit die Polymermasse (30; 50) die Verstärkungs-Fasermatte (28; 42a) durchdringt, und Verschließen der Form (24; 46) mit einem Deckel (32; 48) nach vollständiger Durchdringung.

5. Verfahren nach Anspruch 2, bei dem der Schritt (c) ersetzt werden kann durch den Schritt
(c2) Verschließen der Form mit einem Deckel (32; 48) und dann Zuführen einer ungesättigten einwertigen Alkohol, Polyisocyanat und Katalysatoren enthaltenden Polymermasse (30; 50) in die Form (24; 46), damit die Polymermasse (30; 50) die Verstärkungs-Fasermatte (28; 42a) durchdringt.

6. Innenausbaumaterial für Fahrzeuge mit einer Kunststoff-Oberflächenschicht und einer Schicht aus einer Polymermasse, die gemäß dem Verfahren nach einem der vorhergehenden Ansprüche hergestellt ist, dadurch gekennzeichnet, daß eine von der Polymermasse (30; 50) durchdrungene Verstärkungs-Fasermatte (28; 42a) enthalten ist, und die Kunststoff-Oberflächenschicht (22;44) integral daran angeformt ist, wobei die Polymermasse (30; 50) ungesättigten einwertigen Alkohol, Polyisocyanat und Katalysatoren enthält.

7. Innenausbaumaterial für Fahrzeuge nach Anspruch 6, bei dem die im Schritt (a) verwendete thermoplastische Kunstharzplatte (22a ; 44a) aus einem Material einer aus elastischem Polyvinylchloridharz, elastischem geschäumten Polyvinylchloridharz und einer elastischen Mischsubstanz aus Polyvinylchloridharz und ABS-Harz bestehenden Gruppe besteht.

8. Innenausbaumaterial für Fahrzeuge nach Anspruch 6, bei dem die im Schritt (b) verwendete Verstärkungs-Fasermatte (28; 42a) Glasfasern enthält.

9. Innenausbaumaterial für Fahrzeuge nach Anspruch 8, bei dem die Verstärkungs-Fasermatte (28; 42a) zum Teil Kohlefasern enthält.

10. Innenausbaumaterial für Fahrzeuge nach Anspruch 6, bei dem das im Schritt (b) verwendete Klebemittel (26) aus einem der Materialien Urethan-Klebstoff, Epoxid-Klebstoff und Acryl-Klebstoff besteht.

11. Innenausbaumaterial für Fahrzeuge nach Anspruch 6, bei dem der im Schritt (c) verwendete ungesättigte einwertige Alkohol der Polymermasse (30; 50) sowohl Fumarsäureester-Alkohol (einwertig) und Maleinsäureester-Alkohol (einwertig) enthält.

12. Innenausbaumaterial für Fahrzeuge nach Anspruch 11, bei dem mehr als 95% des ungesättigten einwertigen Alkohols Fumarsäureester-Alkohol (einwertig) ist.

13. Innenausbaumaterial für Fahrzeuge nach Anspruch 11, bei dem der ungesättigte einwertige Alkohol synthetisch aus Methacrylsäure, Propylenoxid und Maleinsäureanhydrid bei Anwesenheit eines Aminkatalysators hergestellt ist.

14. Innenausbaumaterial für Fahrzeuge nach Anspruch 6, bei dem das im Schritt (c) verwendete Polyisocyanat der Polymermasse (30; 50) entweder aromatisches Polyisocyanat oder aliphatisches Polyisocyanat oder eine Mischung derselben ist.

15. Innenausbaumaterial für Fahrzeuge nach Anspruch 6, bei dem der im Schritt (c) verwendete Katalysator der Polymermasse (30; 50) ein Stoff oder eine Kombination von zwei oder mehr Stoffen aus der aus Dibutylzinn-dilaurat, Zinn-octoat, Dimethylzinn-dilaurat, Kobalt-Acetylacetonat, tert. Butylperbenzoat, Benzoylperoxid und Methyl-Ethyl-Ketonperoxid bestehenden Gruppe ist.

## Revendications

1. Procédé pour fabriquer un matériau intérieur pour véhicules, caractérisé en ce qu'il comprend les étapes suivantes:
(a) formage sous vide d'une couche de surface en plastique (22; 44) consistant à aspirer dans un moule (24; 46), pourvu d'une certaine forme, une feuille de résine thermoplastique (22a; 44a) présentant un état thermoassoupli;
(b) positionnement d'un mat de fibres de renforcement (28; 42a) sur ladite couche de surface (22; 44) à l'aide d'un adhésif (26) dans ledit moule (24; 46);
(c) injection d'une composition polymère (30; 50) contenant un mono-alcool insaturé, du polyisocyanate et des catalyseurs dans ledit moule (24; 46) afin d'imprégner ledit mat de fibres de renforcement (28; 42a) avec ladite composition polymère (30; 50), et
(d) démoulage d'un objet moulé d'un seul tenant (40) dudit moule (24; 46) après traitement de ladite composition polymère (30; 50).

2. Procédé selon la revendication 1, caractérisé en ce que le mono-alcool insaturé et le polyisocyanate de ladite composition polymère (30; 50) sont mélangés lors de leur injection dans ledit moule (24; 46) au cours de l'étape (c).

3. Procédé selon la revendication 2, caractérisé en ce que l'aspiration est effectuée au cours des étapes (a), (b) et (c).

4. Procédé selon la revendication 2, caractérisé en ce que l'étape (c) peut être remplacée par l'étape suivante:
(c1) injection d'une composition polymère (30; 50) contenant un mono-alcool insaturé, du polyisocyanate et des catalyseurs dans ledit moule (24; 46) afin d'imprégner ledit mat de fibres de renforcement (28; 42a) avec ladite composition polymère (30; 50), et fermeture dudit moule (24; 46) à l'aide d'un couvercle (32; 48), une fois l'opération d'imprégnation terminée.

5. Procédé selon la revendication 2, caractérisé en ce que l'étape (c) peut être remplacée par l'étape suivante:
(c2) fermeture dudit moule à l'aide d'un couvercle (32; 48) puis injection d'une composition polymère (30; 50) contenant un mono-alcool insaturé, du polyisocyanate et des catalyseurs dans ledit moule (24; 46) de manière à imprégner ledit mat de fibres de renforcement (28; 42a) à l'aide de ladite composition polymère (30; 50).

6. Matériau intérieur pour véhicules, présentant une couche de surface en plastique et une couche d'une composition polymère, qui est fabriqué par le procédé selon l'une quelconque des revendications précédentes, caractérisé en ce qu'il comprend un mat de fibres de renforcement (28; 42a) imprégné de la composition polymère (30; 50) et formé d'un seul tenant avec la couche de surface de plastique (22; 44), ladite composition polymère (30; 50) contenant un mono-alcool insaturé, du polyisocyanate et des catalyseurs.

7. Matériau intérieur pour véhicules, selon la revendication 6, caractérisé en ce que ladite feuille de résine thermoplastique (22a; 44a) utilisée dans l'étape (a) peut être choisie dans un groupe contenant une résine de chlorure de polyvinyle élastique, une résine de chlorure de polyvinyle expansé élastique et une substance élastique d'un mélange de résine de chlorure de polyvinyle et de résine ABS.

8. Matériau intérieur pour véhicules, selon la revendication 6, caractérisé en ce que ledit mat de fibres de renforcement (28; 42a) utilisé dans l'étape (b) comprend des fibres de verre.

9. Matériau intérieur pour véhicules, selon la revendication 8, caractérisé en ce que ledit mat de fibres de renforcement (28; 42a) contient en partie des fibres de carbone.

10. Matériau intérieur pour véhicules, selon la revendication 6, caractérisé en ce que ledit adhésif (26) utilisé dans l'étape (b) peut être choisi parmi un adhésif uréthane, un adhésif époxy et un adhésif acrylique.

11. Matériau intérieur pour véhicules, selon la revendication 6, caractérisé en ce que ledit mono-alcool insaturé de la composition polymère (30; 50) utilisée dans l'étape (c) contient de l'ester fumarique-mono-alcool et de l'ester maléique-mono-alcool.

12. Matériau intérieur pour véhicules, selon la revendication 11, caractérisé en ce que plus de 95% dudit mono-alcool insaturé est de l'ester fumarique-mono-alcool.

13. Matériau intérieur pour véhicules, selon la revendication 11, caractérisé en ce que ledit mono-alcool insaturé est synthétisé à partir d'acide méthacrylique, d'oxyde de propylène et d'anhydre de l'acide maléique, en présence d'un catalyseur amine.

14. Matériau intérieur pour véhicules, selon la revendication 6, caractérisé en ce que ledit polyisocyanate de la composition polymère (30; 50) utilisé dans l'étape (c) est un matériau d'un mélange de polyisocyanate aromatique et de polyisocyanate aliphatique.

15. Matériau intérieur pour véhicules, selon la revendication 6, caractérisé en ce que ledit catalyseur de la composition polymère (30; 50) utilisée dans l'étape (c) est choisi dans le groupe comprenant du dilaurate dibutyléique d'étain, de l'octoate stannique, du dilaurate diméthylique d'étain, de l'acétyl acétonate de cobalt, du tert-butyl perbenzoate, du péroxyde de benzyle et du péroxyde de méthyl-éthyl cétone, ou une combinaison de deux catalyseurs ou plus choisis dans le groupe ci-dessus.
